# EUROPÄISCHE PATENTSCHRIFT

(11) **EP 1 150 760 B1**
(45) Veröffentlichungstag und Bekanntmachung des Hinweises auf die Patenterteilung: **02.03.2005**
(21) Anmeldenummer: 99964532.8
(22) Anmeldetag: 08.12.1999
(51) Int. Cl.: B01D 25/26

(54) **MODULFILTER MIT ZUMINDEST EINEM ZULAUF FÜR UNFILTRAT UND EINEM ABLAUF FÜR DAS FILTRAT UND MIT ZUMINDEST EINEM FILTERMODUL**
MODULE FILTER COMPRISING AT LEAST ONE ADMISSION FOR THE NON-FILTRATE AND AT LEAST ONE DISCHARGE FOR THE FILTRATE AND COMPRISING AT LEAST ONE FILTER MODULE
FILTRE A MODULES AYANT AU MOINS UNE AMENEE POUR LE PRODUIT NON FILTRE ET UNE EVACUATION POUR LE PRODUIT FILTRE ET COMPORTANT AU MOINS UN MODULE FILTRANT

(30) Priorität: 15.12.1998 DE 19857751
(43) Veröffentlichungstag der Anmeldung: 07.11.2001
(73) Patentinhaber: Pall Corporation, East Hills, New York 11548 (US)
(72) Erfinder: DIEMER, Wolfgang, D-73550 Waldstetten (DE); FREISCHLAG, Horst, D-73560 Böbingen (DE); FIGGLE, Klaus, D-73776 Altbach (DE); SCHEIBLE, Eberhard, D-73529 Schwäbisch Gmünd (DE)
(74) Vertreter: Riedel, Peter, Dipl.-Ing.
(86) Internationale Anmeldenummer: PCT/EP1999/009634
(87) Internationale Veröffentlichungsnummer: WO 2000/035555

(56) Entgegenhaltungen:
- EP-A- 0 671 198
- DE-A- 19 744 572
- DE-U- 8 620 132
- US-A- 5 779 899

## Beschreibung

Die Erfindung betrifft einen Modulfilter mit zumindest einem Zulauf für Unfiltrat und einem Ablauf für das Filtrat und mit zumindest einem Filtermodul der im Oberbegriff des Anspruchs 1 angegebenen Gattung.

Aus der EP 0 233 999 A ist ein Filtermodul bekannt, bei dem Filterzellen und Stützkörper abwechselnd entlang eines Zentralrohrs aufgeschichtet sind. In den Filterzellen befinden sich ebenfalls Stützstrukturen, die das Filtermaterial der Filterzellen abstützen. Das Unfiltrat wird von außen an die Filterzellen geführt, und das Filtrat wird über das Innere der Filterzellen und über das Zentralrohr abgeführt. Nachteilig ist hierbei, daß zum einen die Stützkörper einen gleichmäßigen Zutritt des Unfiltrats an die Filterzellen verhindern und andererseits die Filterstoffe an die Stützkörper zwischen den Filterzellen und an den gesamten Innenraum des Modulfilters angelagert werden.

Aus der US 5,779,899 ist ein Filter für hochviskose Flüssigkeiten bekannt, bei dem entlang eines Zentralrohres mit radialen Öffnungen abwechselnd Filterzellen und Stützkörper aufgereiht sind. Die Stützkörper sind mannigfaltig ausgebildet, wie etwa als kreisrunde, ebene Metallscheiben mit radial verlaufenden Vertiefungen und Öffnungen in den Vertiefungen ausgebildet. Eine vollständige Trennung des Filtrats vom Unfiltrat ist mit dem Filter nur unzureichend möglich und eine rückstandsfreie Entsorgung der abgetrennten Feststoffe ohne Reinigungsaufwand ist mit dem Filter nicht möglich.

Der vorliegenden Erfindung liegt die Aufgabe zugrunde, einen Modulfilter der im Oberbegriff des Anspruchs 1 genannten Gattung zu schaffen, der bei minimiertem apparativen Aufwand eine vollständige Trennung des Filtrats vom Unfiltrat ermöglicht, wobei die abgetrennten Feststoffe vollständig und rückstandsfrei ohne Reinigungsaufwand am Modulfilter entsorgt werden können.

Diese Aufgabe wird durch einen Modulfilter mit den Merkmalen des Anspruchs 1 und durch einen Modulfilter mit den Merkmalen des Anspruchs 3 gelöst.

Die wesentlichen Vorteile des Erfindungsgegenstandes sind darin zu sehen, daß die Anströmung der Filtermodule mit Unfiltrat durch einen Zentralkanal erfolgt, so daß die Feststoffe in den einzelnen Filterzellen angelagert werden und bei der Entsorgung nicht nach außen treten können. Durch die innen angeströmte Modulbauweise ist zudem die Gefahr für das Ausspülen von Filtermaterial aus der Filterschicht vermieden. Zwischen den Filterzellen des Filtermoduls stützt je ein Drainagestützkörper den Differenzdruck ab und übernimmt die Ableitung des Filtrats zu einem Ablauf des Modulfilters. Der außerhalb der Filterzelle liegende Drainagestützkörper übernimmt zudem die Schutzfunktion für die Filterschicht. Schutzvliese, wie sie üblicherweise angewandt werden, können somit entfallen. In der Filterzelle selbst muß nicht zwingend ein Drainagestützkörper vorhanden sein, so daß der komplette Innenraum der Filterzelle mit Feststoffen aufgefüllt werden kann. Zum einen ist dadurch eine Kuchenwäsche in Filtrationsrichtung möglich und zum anderen können so durch den Austausch der Filtermodule die abgetrennten Feststoffe vollständig und rückstandsfrei ohne Reinigungsaufwand der Filtergehäuseflächen entsorgt werden. Das Bedienungspersonal ist somit bei der Entsorgung der Feststoffe nicht gefährdet, da die Feststoffe zusammen mit den Filtermodulen aus dem Modulfilter entnommen und entsorgt werden können. Ebenso kommt es aufgrund des gegenüber dem gattungsgemäßen Modulfilter umgekehrten Fluidstroms - vom Inneren der Filterzelle zum Behälterinneren - lediglich zur Benetzung der Bauteile mit Filtrat. Damit kann gleichzeitig die Flüssigkeit, die teilweise teuren Wertstoff darstellt, vollständig zurückgewonnen werden. Der Reinigungsaufwand entfällt.

In einer rückspülbaren Modulbauweise sorgt ein in der Filterzelle befindlicher Drainagestützkörper dafür, daß eine Rückspülung des Filtrats bei vollem Betriebsdruck möglich ist, ohne daß die Filterzelle kollabiert. Eine Rückspülung des Filtrats ermöglicht hierbei eine bessere Ausnutzung des Filtermaterials. Ebenso ist ein chemisches Waschen des Kuchens in beiden Richtungen möglich.

Der komplette Filterapparat ist sehr einfach aufgebaut und erfordert geringe Investitionskosten auch bei hohen Korrosionsanforderungen. Die Filtermodule werden hierbei nach dem Prinzip in der älteren Patentanmeldung 197 44 574.8, nämlich durch Adapter, welche in die Anschlußringe der Filtermodule greifen, verbunden. Bei einer anderen Ausführungsform übernimmt ein Zentralstab mehrere Aufgaben. Er dient zum einen zur Fixierung der in dem Filterbehälter aufgeschichteten Filtermodule, indem er durch deren zentrale Öffnungen geführt wird. Ferner dient er als Zuganker für einen Deckel mit Preßplatte am oberen Ende der Filtermodulschicht, indem er sich mittels einer Befestigungsanordnung, insbesondere mit Bajonettverschluß, an der Bodenplatte des Modulfilters abstützt. Unter Mitwirkung der zwischen die Filtermodule gelegten Dichtungsringe werden die Filtermodule gegeneinander dicht verbunden. Bei einer anderen Ausführungsform entfällt zur Abdichtung gegen den Behälterboden und die Behälterdecke ein Dichtungselement, da das Filtermaterial an diesen Verbindungsstellen bereits mit einem Dichtprofil vorgeprägt ist, welches zu den entsprechend profilierten Flächen am Behälterboden und der Behälterdecke paßt. Der Zentralstab dient insbesondere jedoch als Zulauf für das Unfiltrat, welches über Öffnungen in dessen Mantelfläche darin in die Filterzellen gelangen kann. Um die so aufgeschichteten Filtermodule wird üblicherweise ein Behälter gestülpt, der jedoch wiederum, da er, vom Fluidstrom aus betrachtet, auf der nahezu drucklosen Ablaufseite positioniert ist, leicht gebaut sein kann. Der Behälter hat lediglich ableitende und abschirmende Funktion in bezug auf den Filtratfluß. Bei Anwendung eines Zentralstabes werden zum Entfernen des Feststoffs die Filtermodule von dem Zentralstab gestreift und entsorgt. Sonst werden die Filtermodule einzeln entkoppelt und entsorgt.

Ausführungsbeispiele der Erfindung sind nachstehend anhand der Zeichnung näher erläutert. In der Zeichnung zeigt:
- Fig. 1: die schematische Darstellung eines axialen Schnitts durch einen Modulfilter,
- Fig. 2: einen Querschnitt durch einen erfindungsgemäßen Filtermodul,
- Fig. 3: einen Ausschnitt einer Draufsicht auf einen Drainagestützkörper,
- Fig. 4: einen Schnitt entlang der Linie IV-IV in Fig. 3,
- Fig. 5: eine Draufsicht auf einen Stützring,
- Fig. 6: einen Querschnitt durch einen Stützring,
- Fig. 7: eine Ansicht VII auf einen Stützring,
- Fig. 8: einen Querschnitt durch einen Filtermodul an Behälterdecke und -boden festgelegt in der Ausführungsform ohne Moduldichtung,
- Fig. 9: eine Einzelheit mit zwei Varianten von Anpreßvorrichtungen für die Drainagedeckplatte.

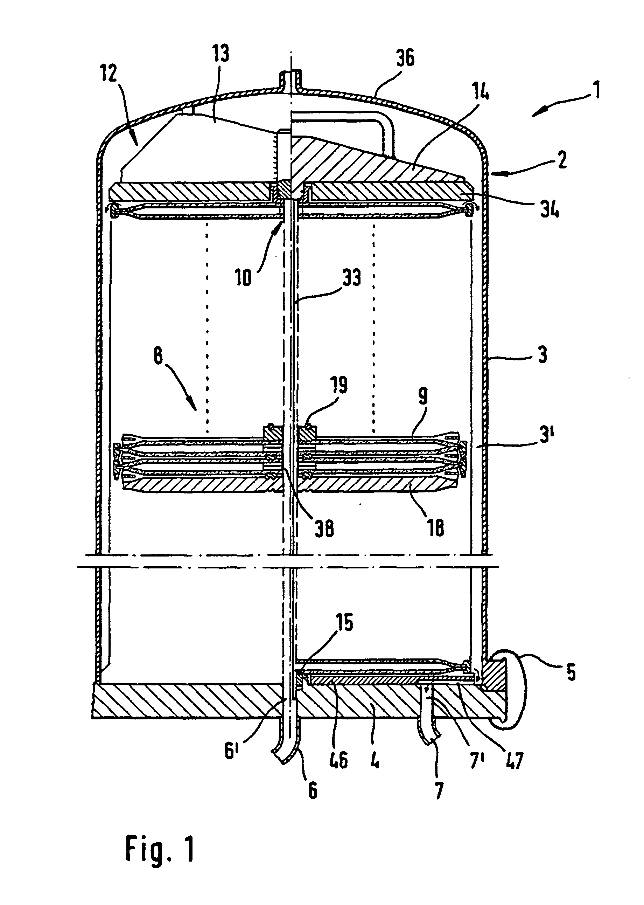

In Fig. 1 ist ein Modulfilter 1 zur Filtration von Flüssigkeiten, wie chemischen Suspensionen oder Wein, Bier und Saft dargestellt. Dieser besteht aus einem Behälter 2 mit Gehäuse 3 und Boden 4. Das Gehäuse 3 ist mittels Klammerschrauben 5 druckdicht auf dem Boden 4 festgelegt. Im Behälter 2 ist über eine Befestigungsanordnung 15, die insbesondere als Bajonettverschluß ausgebildet ist, ein Zentralstab 33 am Boden 4 gehalten.

Die Filtermodule 8 sind mit ihren zentralen öffnungen 10 axial ausgerichtet übereinander angeordnet und bilden in ihrem Zentrum einen Zentralkanal 28. Die Filtermodule 8 sind gegeneinander durch Dichtungsringe 19 abgedichtet und durch eine Drainagedeckplatte 34, welche sich entweder durch einen Stützhut 12 mit Stützrippen 13 gegen ein Behälterdach 36 abstützt, oder durch eine Preßplatte mit Zuganker 14 mit dem Boden 4 verbunden ist, so daß die Filtermodule 8 zwischen einer Drainagebodenplatte 46 und der Drainagedeckplatte 34 festgelegt sind. Die Drainagedeckplatte kann in einer weiteren Ausführungsform des Modulfilters durch eine Anpreßvorrichtung, die sich außerhalb des Behälters am Behälterdach abstützt, angepreßt werden. Zwischen den einzelnen Filtermodulen 8 befinden sich Drainagezwischenplatten 18, die das Filtrat zwischen den Filtermodulen 8 ableiten und den Differenzdruck zwischen den Filtermodulen 8 abstützen. Jeder Filtermodul 8 besteht aus mehreren übereinander geschichteten Filterzellen 9 Ein Anschlußrohr 6 am Behälterboden 4 dient als Zulauf 6' für das Unfiltrat, welches über den Zentralkanal 28 und in dessen Mantelfläche 38 angeordnete Öffnungen 39 ins Innere der Filterzellen 9 gelangt. Der Feststoff wird dort abgeschieden, und das Filtrat tritt durch Zwischenräume der benachbarten Filterzellen 9 in den vom Gehäuse 3 begrenzten Hohlraum. Das Filtrat fließt zum Behälterboden 4 hin und tritt durch einen Ablauf 7' aus einem die Filtermodule 8 umgebenden Hohlraum 3' in ein Anschlußrohr 7 zum Austrag des Filtrats. Im Bereich des Ablaufs 7' weist die Drainagebodenplatte 46 eine Aussparung 47 auf, so daß stets ein ausreichender Querschnitt für das Filtrat zur Verfügung steht.

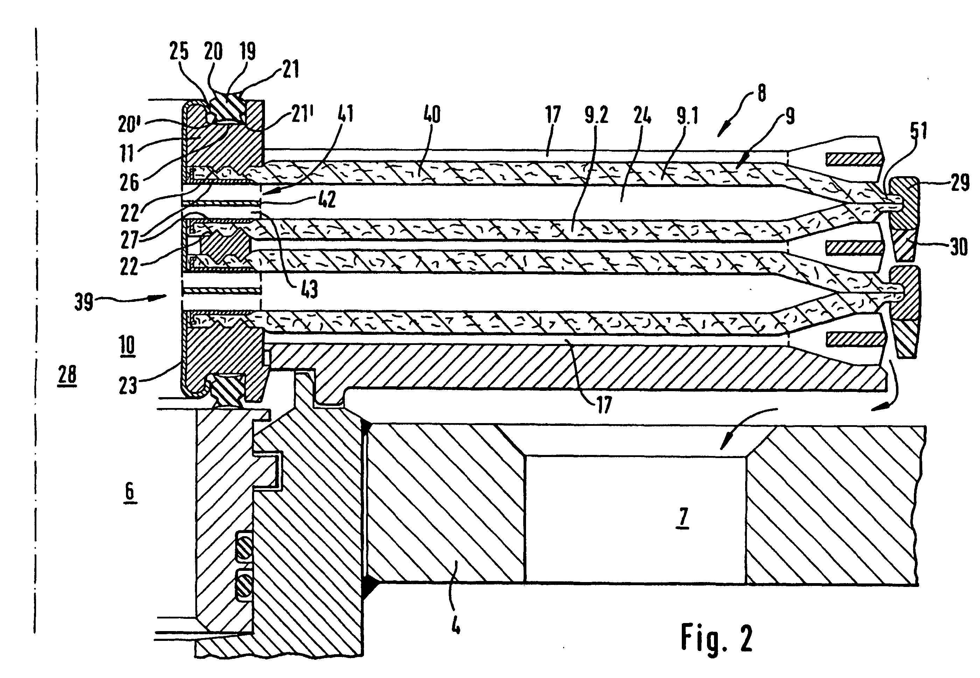

Die Fig. 2 zeigt einen Querschnitt durch eine Hälfte des Filtermoduls 8, der aus mehreren scheibenförmigen Filterzellen 9 besteht, die unter Zwischenschaltung jeweils eines Drainagestützkörpers 17 aufeinandergestapelt sind. Die Filterzellen 9 weisen eine zentrale Öffnung 10 auf und sind so ausgerichtet, daß diese jeweils deckungsgleich übereinanderliegen. Die Filterzellen 9 bestehen im wesentlichen aus zwei Lagen 9.1 und 9.2 eines Filtermaterials, insbesondere einer Filterschicht und/oder einer Filtermembran, wobei die radial äußeren Ränder der oberen und unteren Lagen durch einen umlaufenden Rahmen 29 dicht verbunden sind. Zwischen den Lagen 9.1 und 9.2 der Filterzelle 9 ist ein Hohlraum 24 gebildet. An der Unterseite des Rahmens 29 sind Stütznoppen 30 über den Umfang gleichmäßig verteilt vorgesehen, wobei sich jede Filterzelle 9 über die Stütznoppen 30 auf dem Rahmen 29 der jeweils nachfolgenden Filterzelle 9 abstützt, so daß ein vorgegebener Abstand zwischen zwei benachbarten Filterzellen 9 aufrechterhalten wird.

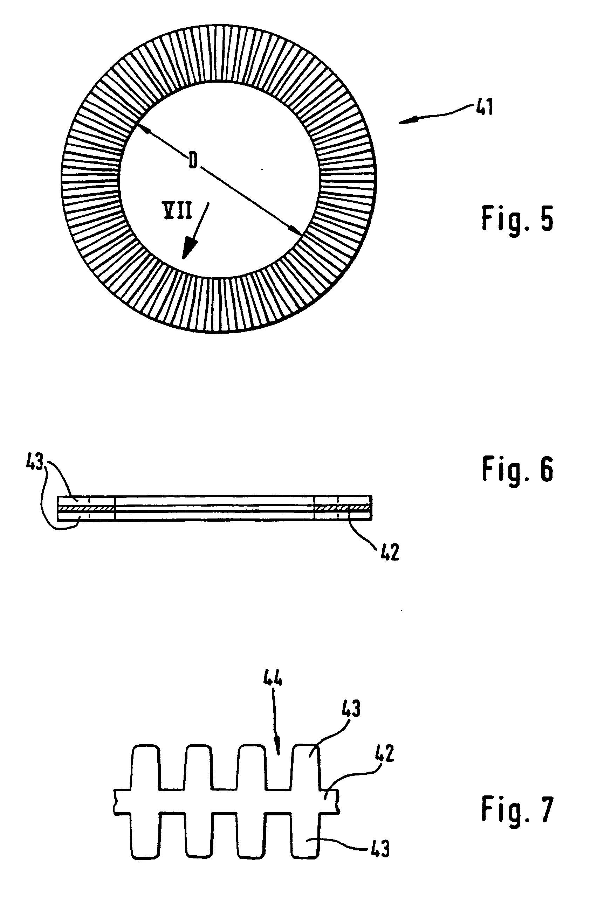

Um den jeweiligen Hohlraum 24 der Filterzellen 9 mit dem Zentralkanal 28 in offener Verbindung zu halten, sind ringförmige Stützelemente 41 eingelegt, deren Innenradius der Querschnittsform des Zentralkanals 28 angepaßt ist. Wie die Draufsicht gemäß Fig. 5 und die vergrößerte Darstellung einer Ansicht in radialer Richtung gemäß Fig. 7 zeigen, sind die Stützelemente 41 aus einer mittleren Scheibe 42 mit axial hervorstehenden und radial ausgerichteten Rippen 43 gebildet. Die Filterzellen 9 sind an dem radial innenliegenden Bereich mit Abdeckringen 27 aus einem druckfesten Material versehen, an denen sich die Rippen 43 der Stützelemente 41 abstützen.

Zwischen die Filterzellen 9 sind Drainagestützkörper 17 eingelegt, die in ihrem Grundriß annähernd mit den Filterzellen 9 identisch sind. Die Drainagestützkörper 17 sind durch Vorsprünge 22 fixiert, indem diese in das wesentlich weichere Material der oberen und unteren Lage 9.1 bzw. 9.2 der benachbarten Filterzellen 9 eindringen. An den axialen Enden des Filtermoduls 8 befindet sich jeweils ein Abschlußring 11, der an der Außenseite der jeweils endseitigen Filterzelle 9 anliegt und der an der dem Filtermodul 8 abgewandten Stirnseite eine Ringnut 26 aufweist. Durch die zentralen öffnungen aller Filterzellen 9 erstreckt sich eine Hülse 23, wobei die Hülse mit einer Vielzahl von öffnungen 39 in deren Mantelfläche versehen ist, so daß die Hohlräume 24 der Filterzellen 9 mit dem innerhalb der Hülse 23 verlaufenden Zentralkanal 28 verbunden sind.

Die Hülse 23 besitzt an ihren axialen Enden einen umgeformten Rand 25 mit einem in axialer Richtung zum Filtermodul 9 hin verlaufenden Abschnitt, der in die Ringnut 26 greift und somit den aus Filterzellen 9, Drainagestützkörpern 17 und Stützelementen 41 bestehenden Filtermodul 8 lagesicher zusammenhält. Außerdem ist in der Ringnut 26 ein Dichtungsring 19 vorgesehen, welcher in einer bevorzugten Ausführung Dichtlippen 20, 20', 21, 21' zu- und abgewandt zum Filtermodul 8 aufweist, um eine sichere Abdichtung der Filtermodule 8 gegeneinander und bei Wärmedehnung der Filtermodule zu gewährleisten.

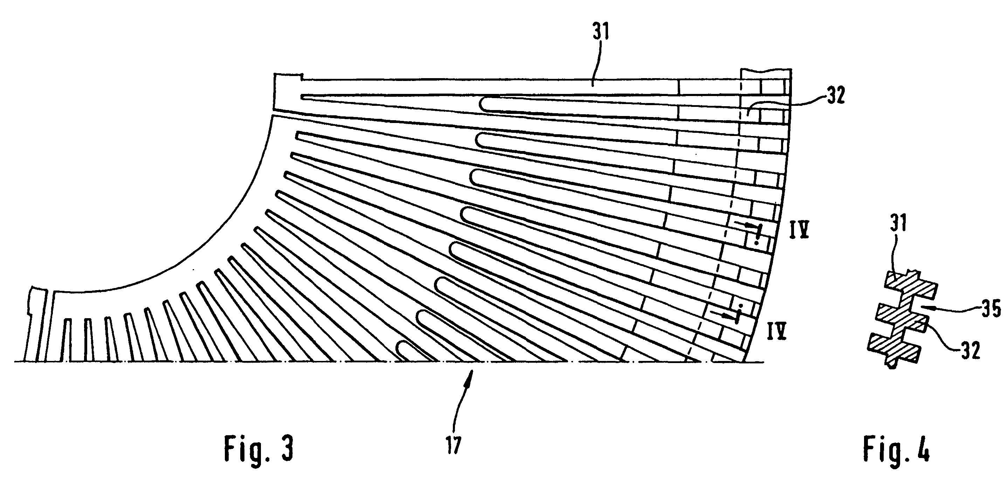

Fig. 3 zeigt einen Ausschnitt aus einer Draufsicht eines Drainagestützkörpers 17. Bevorzugt ist dessen Grundriß kreisscheibenförmig mit radial verlaufenden Erhebungen 31, 32. Die Erhebungen 31, 32 sind in ihrer radialen Ausdehnung unterschiedlich lang, so daß die Abstände zwischen den Erhebungen ein kritisches Maß nicht überschreiten und trotz des Differenzdrucks zwischen dem Hohlraum 24 und der Außenseite der Filterzellen 9 die Lagen 9.1 und 9.2 sicher durch die Erhebungen 31, 32 abgestützt werden, ohne daß das Material der Lagen, insbesondere ein Filtervlies, in die zwischen den Erhebungen 31, 32 gebildeten Abflußrinnen 35 einsinkt. Bevorzugt weisen die Drainagestützkörper 17 ein Gefälle von deren zentralen Öffnung 10 weg zu deren Rand auf. Damit ist sichergestellt, daß das Filtrat radial in den Abflußrinnen 35 nach außen zum Behältergehäuse 3 hin fließt.

Die Fig. 4 zeigt einen Schnitt durch den Drainagestützkörper 17 entlang der Linie IV-IV in Fig. 3. Die streifenförmig axialen, in radialer Richtung des Drainagestützkörpers 17 verlaufenden Erhebungen 31, 32 sind beabstandet und bilden Abflußrinnen 35 für das Filtrat.

Die Fig. 5 zeigt eine Draufsicht auf einen Stützring 41. Dessen Innendurchmesser D entspricht demjenigen der zentralen öffnung 10. Der Stützring 41 trägt in diesem Ausführungsbeispiel beabstandete Rippen 43. Die Fig. 6 zeigt einen axialen Schnitt durch den Stützring 41, es wird daraus ersichtlich, daß Rippen 43 beidseitig auf dem Grundkörper 42 des Stützrings angeordnet sind.

Fig. 7 zeigt eine Ansicht in Richtung des Pfeiles VII des Stützringes 41. Die Öffnungen 44 im Stützring 41, durch welche das Unfiltrat in den Hohlraum 24 der Filterzellen gelangt, werden durch beabstandete Rippen 43 gebildet.

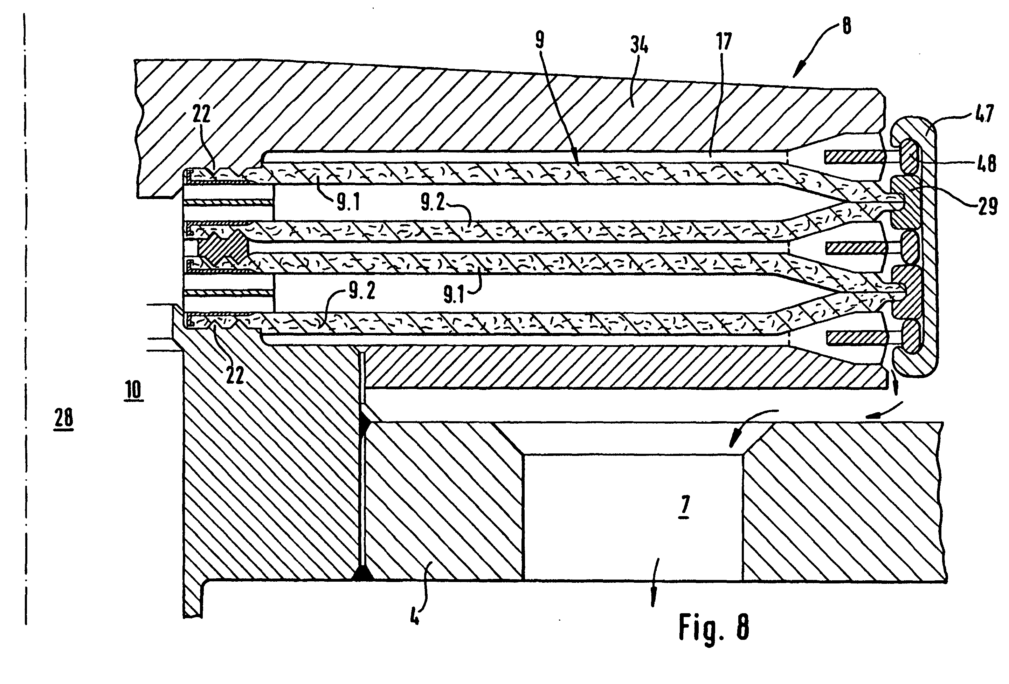

Fig. 8 zeigt einen Querschnitt durch eine Hälfte eines Filtermoduls 8 in der Ausführungsform ohne Moduldichtung (Bezugszeichen 19 in Fig. 2), der am Behälterboden 4 und der Drainagedeckplatte 34 festgelegt ist. Am Behälterboden 4 sind Vorsprünge 22 vorgesehen, die die untere Lage 9.2 der Filterschicht direkt fixieren und gegen das Behälterinnere abdichten. In gleicher Weise bewirken Vorsprünge 22 auf der Drainagedeckplatte 34 ein Fixieren und Abdichten der oberen Lage 9.1 der Filterschicht. Eine Dichtung ist daher an den genannten Dichtflächen nicht erforderlich. An mehreren Stellen am Umfang des Filtermoduls 8 sind Klammern 47 vorgesehen, die in Stütznoppen 48, welche axial an den Drainagestützkörpern 17 angeordnet sind, eingerastet sind. Die Klammern 47 verbinden den jeweils oberen und unteren Drainagestützkörper 17 eines Filtermoduls 8 und halten diesen somit am Umfang zusammen. Zum Zwecke der Entsorgung von einzelnen Filterzellen 9 können die Klammern 47 entfernt werden.

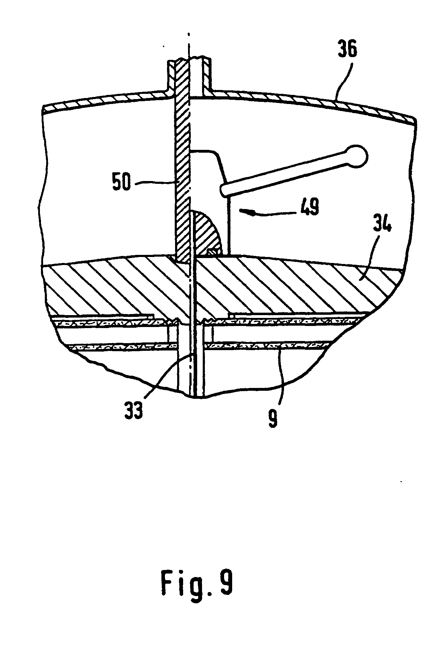

Fig. 9 zeigt eine Einzelheit zweier verschiedener Anpreßvorrichtungen für die Drainagedeckplatte 34. Eine unter dem Behälterdach 36 vorgesehene Anpreßvorrichtung 49 stützt sich über einen in Fig. 1 dargestellten Zuganker am Behälterboden ab und legt die Filterzellen 9 der Filtermodule zwischen der Drainagedeckplatte 34 und dem Behälterboden fest.

Die Drainagedeckplatte 34 kann auch über eine nicht gezeigte Anpreßvorrichtung, die sich außerhalb des Modulfilters am Behälterdach abstützt und mit ihrer Druckstange 50 auf die Drainagedeckplatte 34 wirkt, die Filterzellen 9 der Filtermodule festlegen.

## Patentansprüche

1. Modulfilter (1) mit einem Behälter (2), bestehend aus zumindest einem Behältergehäuse (3) und einem Behälterboden (4) und mit zumindest einem Zulauf für Unfiltrat (6) und einem Ablauf für das Filtrat (7), mit zumindest einem Filtermodul (8), bestehend aus mehreren aufeinandergeschichteten, scheibenförmigen, im wesentlichen aus Filtermaterial (40) bestehenden Filterzellen (9), die jeweils eine zentrale Öffnung (10) aufweisen, und so zumindest einen Zentralkanal (28) bilden, welcher seinerseits mit dem Innenraum (24) jeder Filterzelle (9) fluidisch verbunden ist,
**dadurch gekennzeichnet, daß** der Zentralkanal (28) an einen Zulauf (6') für das Unfiltrat angeschlossen und mit dem Innenraum (24) der Filterzellen (9) verbunden ist und ein die Filterzellen (9) umgebender Raum (3') innerhalb des Behältergehäuses (3) gebildet ist, der mit einem Ablauf (7') für das Filtrat in Verbindung steht, und mit Stützkörpern zwischen den Filterzellen (9), wobei die Stützkörper als kreisscheibenförmige Drainagestützkörper (17) ausgebildet sind, welche sich mindestens annähernd über die gesamte Fläche der Filterzellen (9) erstrecken, wobei in dem Drainagestützkörper (17) eine Vielzahl von zum äußeren Rand der Filterzellen bzw. Drainagestützkörper verlaufender Drainagekanäle (35) vorgesehen ist und die Drainagestützkörper (17) Erhebungen (31, 32) aufweisen, wobei die Erhebungen in axialer Richtung aus der Scheibe hervorstehen und der Zwischenraum zwischen den Erhebungen (31, 32) als Drainagekanal (35) ausgebildet ist und zur Ableitung des Filtrats dient und wobei Mittel vorhanden sind, welche die ein Filtermodul (8) bildenden Filterzellen (9) und Drainagestützkörper (17) am Umfang zusammenhalten.

2. Modulfilter nach Anspruch 1,
**dadurch gekennzeichnet, daß** die Mittel Klammern (47) sind, die an mehreren Stellen am Umfang des Filtermoduls (8) vorgesehen sind.

3. Modulfilter (1) mit einem Behälter (2), bestehend aus zumindest einem Behältergehäuse (3) und einem Behälterboden (4) und mit zumindest einem Zulauf für Unfiltrat (6) und einem Ablauf für das Filtrat (7), mit zumindest einem Filtermodul (8), bestehend aus mehreren aufeinandergeschichteten, scheibenförmigen, im wesentlichen aus Filtermaterial (40) bestehenden Filterzellen (9), die jeweils eine zentrale Öffnung (10) aufweisen, und so zumindest einen Zentralkanal (28) bilden, welcher seinerseits mit dem Innenraum (24) jeder Filterzelle (9) fluidisch verbunden ist,
**dadurch gekennzeichnet, daß** der Zentralkanal (28) an einen Zulauf (6') für das Unfiltrat angeschlossen und mit dem Innenraum (24) der Filterzellen (9) verbunden ist und ein die Filterzellen (9) umgebender Raum (3') innerhalb des Behältergehäuses (3) gebildet ist, der mit einem Ablauf (7') für das Filtrat in Verbindung steht, und mit Stützkörpern zwischen den Filterzellen (9), wobei die Stützkörper als kreisscheibenförmige Drainagestützkörper (17) ausgebildet sind, welche sich mindestens annähernd über die gesamte Fläche der Filterzellen (9) erstrecken, wobei in dem Drainagestützkörper (17) eine Vielzahl von zum äußeren Rand der Filterzellen bzw. Drainagestützkörper verlaufender Drainagekanäle (35) vorgesehen ist und die Drainagestützkörper (17) Erhebungen (31, 32) aufweisen, wobei die Erhebungen in axialer Richtung aus der Scheibe hervorstehen und der Zwischenraum zwischen den Erhebungen (31, 32) als Drainagekanal (35) ausgebildet ist und zur Ableitung des Filtrats dient und die den Filtermodul (8) bildenden Filterzellen (9) und Drainagestützkörper (17) von einer auf der dem Zentralkanal (28) zugewandten Seite angeordneten Hülse (23) zusammengehalten werden.

4. Modulfilter nach Anspruch 3,
**dadurch gekennzeichnet, daß** axial endseitig des Filtermoduls (8) koaxial zur zentralen Öffnung (10) je ein Abschlußring (11) vorgesehen ist.

5. Modulfilter nach Anspruch 4,
**dadurch gekennzeichnet, daß** die Hülse (23) aus Metall besteht und an ihrer Mantelfläche eine Vielzahl von Öffnungen (39) aufweist und mit ihren stirnseitigen Enden formschlüssig mit den Abschlußringen (11) verbunden ist.

6. Modulfilter nach Anspruch 5,
**dadurch gekennzeichnet, daß** in dem Abschlußring (11) eine Aussparung in Form einer Ringnut (26) zur Aufnahme eines Dichtungsringes (19) vorgesehen ist.

7. Modulfilter nach einem der Ansprüche 1 bis 6,
**dadurch gekennzeichnet, daß** die Filterzellen (9) und Drainagestützkörper (17) ein Gefälle vom Zentralkanal (28) radial nach außen haben.

8. Modulfilter nach Anspruch 7,
**dadurch gekennzeichnet, daß** die Drainagekanäle (35) als radiale Strahlen zum Umfangsrand des Drainagestützkörpers (17) verlaufen.

9. Modulfilter nach einem der Ansprüche 1 bis 8,
**dadurch gekennzeichnet, daß** auf der dem Zentralkanal (28) zugewandten Seite jeder Filterzelle (9) das Filtermaterial (40) jeder Filterzelle (9) mittels eines Stützelements (41) beabstandet wird, wobei das Stützelement (41) ein Stützring ist, welcher mittels darin angeordneter Durchbrechungen (44) eine fluidische Verbindung vom Zentralkanal (28) zum Innenraum (24) der Filterzellen (9) herstellt.

10. Modulfilter nach einem der Ansprüche 1 bis 9,
**dadurch gekennzeichnet, daß** der Innendurchmesser (D) des Stützringes (41) annähernd dem Durchmesser der zentralen Öffnung (10) entspricht.

11. Modulfilter nach Anspruch 9 oder 10,
**dadurch gekennzeichnet, daß** der Stützring (41) aus einem flachen ringförmigen Grundkörper (42) besteht, wobei der Grundkörper (42) voneinander beabstandete, axiale Erhebungen (43) trägt, die sich radial streifenförmig zu beiden Seiten des Grundkörpers (42) erstrecken.

12. Modulfilter nach einem der Ansprüche 1 bis 11,
**dadurch gekennzeichnet, daß** jede Filterzelle (9) von einer oberen Lage (9.1) und unteren Lage (9.2) des Filtermaterials (40) gebildet ist und die radial äußeren Ränder (51) der oberen und unteren Lage (9.1, 9.2) durch einen Rahmen (29) miteinander verbunden sind, wobei vorzugsweise der Filterwerkstoff (40) ein Filtervlies ist.

13. Modulfilter nach Anspruch 12,
**dadurch gekennzeichnet, daß** der Rahmen (29) an seiner Unterseite Stütznoppen (30) trägt und damit die Rahmen (29) untereinander abgestützt werden.

14. Modulfilter nach Anspruch 1 oder 3,
**dadurch gekennzeichnet, daß** in dem Zentralkanal (28) ein Zentralstab (33) als Zuganker ausgebildet ist und sich mittels einer Befestigungsanordnung (15) an dem Behälterboden (4) des Modulfilters (1) abstützt, und daß am oberen Ende des Zentralrohrs (33) die Drainagedeckplatte (34) angeordnet ist.

15. Modulfilter nach einem der Ansprüche 1 bis 13,
**dadurch gekennzeichnet, daß** die Filtermodule (8) mit ihren zentralen Öffnungen (10) axial übereinander ausgerichtet und mittels einer Drainagedeckplatte (34) im Behälter (2) festgelegt sind.

16. Modulfilter nach Anspruch 14 oder 15,
**dadurch gekennzeichnet, daß** die Drainagedeckplatte 34 durch einen Stützhut (12) mit Stützrippen (13) gegen das Behälterdach (36) abgestützt ist.

17. Modulfilter nach Anspruch 14 oder 15,
**dadurch gekennzeichnet, daß** als Drainagedeckplatte 34 eine mit einem axialen Zuganker versehene Preßplatte (14) vorgesehen ist.

18. Modulfilter nach einem der Ansprüche 1 bis 17,
**dadurch gekennzeichnet, daß** zwischen dem Behälterboden (4) und dem untersten Filtermodul (8) eine Drainagebodenplatte (46) angeordnet ist, die in ihrem dem Ablauf (7') benachbarten Bereich eine Aussparung (47) aufweist.

19. Modulfilter nach Anspruch 14 oder 15,
**dadurch gekennzeichnet, daß** die Drainagedeckplatte (34) entweder mit Hilfe einer Anpreßvorrichtung (49), welche sich außerhalb des Behälters (2) am Behälterdach (36) oder mit Hilfe einer Anpreßvorrichtung (49), die sich innerhalb des Behälters (2) über einen Zentralstab (33) und eine Befestigungsanordnung (15) am Behälterboden (4) abstützt, die Filtermodule (8) zwischen der Drainagebodenplatte (46) festlegt.

## Claims

1. Module filter (1) comprising a container (2), consisting of at least one container housing (3) and a container bottom (4) and comprising at least one admission for a non-filtrate (6) and a discharge for the filtrate (7), comprising at least one filter module (8), consisting of a plurality of stacked, disc-shaped filter cells (9) substantially consisting of filter material (40) and having a central opening (10), respectively, and thus forming at least one central channel (28), which is, in turn, in fluid communication with the inner space (24) of each filter cell (9), **characterised in that** the central channel (29) is connected to an admission (6') for the non-filtrate and connected to the inner space (24) of the filter cells (9) and a space (3') surrounding the filter cells (9) is formed within the container housing (3) which is connected to a discharge (7') for the filtrate, and comprising support bodies between the filter cells (9), the support bodies being formed as circular disc-shaped drainage support bodies (17) which extend at least approximately over the entire surface area of the filter cells (9), wherein in the drainage support body (17) a plurality of drainage channels (35) are provided which extend toward the outer rim of the filter cells or the drainage support bodies, and the drainage support bodies (17) have projections (31, 32), the projections projecting in the axial direction from the disc and the gap between the projections (31, 32) being formed as a drainage channel (35) and serving to remove the filtrate and wherein means are available which hold together the filter cells (9) forming a filter module (8) and drainage support bodies (17) at the periphery.

2. Module filter according to claim 1, **characterised in that** the means are clamps (47), which are provided at a plurality of points at the periphery of the filter module (8).

3. Module filter (1) comprising a container (2), consisting of at least one container housing (3) and a container bottom (4) and comprising at least one admission for a non-filtrate (6) and a discharge for the filtrate (7), comprising at least one filter module (8), consisting of a plurality of stacked, disc-shaped filter cells (9) substantially consisting of filter material (40) and having a central opening (10), respectively, and thus forming at least one central channel (28), which is, in turn in fluid communication with the inner space (24) of each filter cell (9), **characterised in that** the central channel (28) is connected to an admission (6') for the non-filtrate and connected to the inner space (24) of the filter cells (9) and a space (3') surrounding the filter cells (9) is formed within the container housing (3) which is connected to a discharge (7') for the filtrate, and comprising support bodies between the filter cells (9), the support bodies being formed as circular disc-shaped drainage support bodies (17) which extend at least approximately over the entire surface of the filter cells (9), wherein in the drainage support body (17) a plurality of drainage channels (35) are provided which extend toward the outer rim of the filter cells or the drainage support bodies and the drainage support bodies (17) have projections (31, 32), the projections projecting from the disc in the axial direction and the gap between the projections (31, 32) being formed as a drainage channel (35) and serving to remove the filtrate and the filter cells (9) forming the filter module (8) and drainage support bodies (17) are held together by a sleeve (23) arranged on the side facing the central channel (28).

4. Module filter according to claim 3, **characterised in that** a respective closure ring (11) is provided axially at the ends of the filter module (8) and co-axially to the central opening (10).

5. Module filter according claim 4, **characterised in that** the sleeve (23) consists of metal and has on its surface area a plurality of openings (39) and is connected with its end faces with interlocking fit to the closure rings (11).

6. Module filter according to claim 5, **characterised in that** a recess in the form of an annular groove (26) is provided in the closure ring (11) to receive a sealing ring (19).

7. Module filter according to any one of claims 1 to 6, **characterised in that** the filter cells (9) and drainage support bodies (17) have a descending slope from the central channel (28) radially outwardly.

8. Module filter according to claim 7, **characterised in that** the drainage channels (35) extend as radial beams to the peripheral rim of the drainage support body (17).

9. Module filter according to any one of claims 1 to 8, **characterised in that** on the side of each filter cell (9) facing the central channel (28), the filter material (40) of each filter cell (9) is spaced apart by means of a support element (41), the support element (41) being a support ring, which by means of penetrations (44) arranged therein, produces a fluid communication from the central channel (28) to the inner space (24) of the filter cells (9).

10. Module filter according to any one of claims 1 to 9, **characterised in that** the inner diameter (D) of the support ring (41) corresponds approximately to the diameter of the central opening (10).

11. Module filter according to daim 9 or 10, **characterised in that** support ring (41) consists of a flat annular base body (42) wherein the base body (42) has spaced apart axial projections (43) which extend radially in a strip shape on either side of the base body (42).

12. Module filter according to any one of claims to 1 to 11, **characterised in that** each filter cell (9) is formed by an upper layer (9.1) and a lower layer (9.2) of the filter material (40) and the radially outer rims (51) of the upper and lower layers (9.1, 9.2) are connected by a frame (29) to one another, the filter material (40) preferably being a nonwoven filter cloth.

13. Module filter according to claim 12, **characterised in that** the frame (29) at its underside has support knobs (30) and the frames (29) are supported on one another therewith.

14. Module filter according to claim 1 or 3, **characterised in that**, in the central channel (28), a central rod (33) is formed as a tie rod and is supported by means of a fastening arrangement (15) on the container bottom (4) of the module filter (1) and **in that** the drainage cover plate (34) is arranged at the upper end of the central pipe (33).

15. Module filter according to any one of claims 1 to 13, **characterised in that** the filter modules (8) are aligned with their central openings (10) axially above one another and are secured by means of a drainage cover plate (34) in the container (2).

16. Module filter according to claim 14 or 15, **characterised in that** the drainage cover plate (34) is supported by a support cap (12) with support ribs (13) on the container cover (36).

17. Module filter according to claim 14 or 15, **characterised in that** a press plate (14) provided with an axial tie rod is provided as a drainage cover plate (34).

18. Module filter according to any one of claims 1 to 17, **characterised in that** a drainage bottom plate (46), which has a recess (47) in its area adjacent to the discharge (7'), is arranged between the container bottom (4) and the lowest filter module (8).

19. Module filter according to claim 14 or 15, **characterised in that** the drainage cover plate (34) secures the filter modules (8) between the drainage bottom plate (46) either by means of a pressing device (49) which is supported outside the container (2) on the container cover (36) or by means of a pressing device (49) which is supported within the container (2) on the container bottom (4) via a central rod (33) and a fastening arrangement (15).

## Revendications

1. Filtre à modules (1) avec un récipient (2) composé d'au moins un boîtier (3) de récipient et un fond de récipient (4), et avec au moins une amenée pour un produit non filtré (6) et une évacuation pour le produit filtré (7), avec au moins un module filtrant (8) composé de plusieurs cellules filtrantes (9) empilées, en forme de disques, formées essentiellement de matériau filtrant (40), lesquelles comprennent respectivement une ouverture centrale (10) et forment ainsi au moins un canal central (28) qui est relié de son côté par communication fluidique à l'espace interne (24) de chaque cellule filtrante (9),
**caractérisé en ce que** le canal central (28) est raccordé à une amenée (6') pour le produit non filtré, et est relié à l'espace interne (24) des cellules filtrantes (9), et un espace (3') entourant les cellules filtrantes (9) est formé à l'intérieur du boîtier (3) de récipient, lequel est relié à une évacuation (7') pour le produit filtré, et avec des corps de support entre les cellules filtrantes (9), sachant que les corps de support sont configurés comme des corps de support de drainage circulaires (17) qui s'étendent au moins approximativement sur toute la surface des cellules filtrantes (9), sachant qu'il est prévu dans le corps de support de drainage (17) une pluralité de canaux de drainage (35) s'étendant vers le bord externe des cellules filtrantes et/ou des corps de support de drainage, et que les corps de support de drainage (17) comprennent des saillies (31, 32), de telle manière que les saillies dépassent du disque dans le sens axial, et l'espace intermédiaire entre les saillies (31, 32) est configuré comme un canal de drainage (35) et sert à dévier le produit filtré, et sachant qu'il existe des moyens qui solidarisent en périphérie les cellules filtrantes (9) formant un module filtrant (8) et les corps de support de drainage (17).

2. Filtre à modules selon la revendication 1,
**caractérisé en ce que** les moyens sont des brides de fixation (47) prévues à plusieurs endroits de la périphérie du module filtrant (8).

3. Filtre à modules (1) avec un récipient (2) composé d'au moins un boîtier (3) de récipient et un fond (4) de récipient, et avec au moins une amenée pour un produit non filtré (6) et une évacuation pour le produit filtré (7), avec au moins un module filtrant (8) composé de plusieurs cellules filtrantes (9) empilées, en forme de disques, formées essentiellement de matériau filtrant (40), lesquelles comprennent respectivement une ouverture centrale (10) et forment ainsi au moins un canal central (28) qui est relié de son côté par communication fluidique à l'espace interne (24) de chaque cellule filtrante (9),
**caractérisé en ce que** le canal central (28) est raccordé à une amenée (6') pour le produit non filtré, et est relié à l'espace interne (24) des cellules filtrantes (9), et un espace (3') entourant les cellules filtrantes (9) est formé à l'intérieur du boîtier (3) de récipient, lequel est relié à une évacuation (7') pour le produit filtré, et avec des corps de support entre les cellules filtrantes (9), sachant que les corps de support sont configurés comme des corps de support de drainage circulaires (17) qui s'étendent au moins approximativement au-dessus de toute la surface des cellules filtrantes (9), sachant qu'il est prévu dans le corps de support de drainage (17) une pluralité de canaux de drainage (35) s'étendant vers le bord externe des cellules filtrantes et/ou des corps de support de drainage, et que les corps de support de drainage (17) comprennent des saillies (31, 32), de telle manière que les saillies dépassent du disque dans le sens axial, et l'espace intermédiaire entre les saillies (31, 32) est configuré comme un canal de drainage (35) et sert à dévier le produit filtré, et les cellules filtrantes (9) formant le module filtrant (8) et les corps de support de drainage (17) sont solidarisés par une enveloppe (23) disposée sur la face dirigée vers le canal central (28).

4. Filtre à modules selon la revendication 3,
**caractérisé en ce qu'**il est prévu à chaque fois axialement sur les côtés extrêmes du module filtrant (8) coaxialement à l'ouverture centrale (10) un anneau de fermeture (11).

5. Filtre à modules selon la revendication 4,
**caractérisé en ce que** l'enveloppe (23) est en métal et comprend sur sa surface latérale une pluralité d'ouvertures (39), et est reliée par ses extrémités frontales par complémentarité de forme aux anneaux de fermeture (11).

6. Filtre à modules selon la revendication 5,
**caractérisé en ce qu'**il est prévu dans l'anneau de fermeture (11) un évidement ayant la forme d'une rainure annulaire (26) destinée à recevoir un anneau de garniture (19).

7. Filtre à modules selon une des revendications 1 à 6,
**caractérisé en ce que** les cellules filtrantes (9) et les corps de support de drainage (17) présentent une inclinaison radialement vers l'extérieur par rapport au canal central (28).

8. Filtre à modules selon la revendication 7,
**caractérisé en ce que** les canaux de drainage (35) s'étendent comme des faisceaux radiaux par rapport au bord périphérique du corps de support de drainage (17).

9. Filtre à modules selon une des revendications 1 à 8,
**caractérisé en ce que** sur la face dirigée vers le canal central (28) de chaque cellule filtrante (9), le matériau filtrant (40) de chaque cellule filtrante (9) est séparé au moyen d'un élément de support (41), sachant que l'élément de support (41) est un anneau de support qui réalise, au moyen de découpures (44) disposées dans celui-ci, une liaison fluidique entre le canal central (28) et l'espace interne (24) des cellules filtrantes (9).

10. Filtre à modules selon une des revendications 1 à 9,
**caractérisé en ce que** le diamètre interne (D) de l'anneau de support (41) correspond approximativement au diamètre de l'ouverture centrale (10).

11. Filtre à modules selon la revendication 9 ou 10,
**caractérisé en ce que** l'anneau de support (41) est composé d'un corps de base (42) annulaire plat, le corps de base (42) supportant des saillies (43) axiales séparées les unes des autres qui s'étendent radialement en forme de bandes vers les deux côtés du corps de base (42).

12. Filtre à modules selon une des revendications 1 à 11,
**caractérisé en ce que** chaque cellule filtrante (9) est formée par une couche supérieure (9.1) et une couche inférieure (9.2) de matériau filtrant (40), et les bords radialement externes (51) des couches supérieure et inférieure (9.1, 9.2) sont reliés entre eux par un châssis (29), le matériau filtrant (40) étant de préférence un voile filtrant.

13. Filtre à modules selon la revendication 12,
**caractérisé en ce que** le châssis (29) supporte sur sa face inférieure des boutons de support (30) et les châssis (29) sont ainsi soutenus les uns en dessous des autres.

14. Filtre à modules selon la revendication 1 ou 3,
**caractérisé en ce que**, dans le canal central (28), une barre centrale (33) est configurée comme tige d'ancrage et s'appuie au moyen d'un ensemble de fixation (15) contre le fond du récipient (4) du filtre à modules (1), et **en ce que** le panneau supérieur de drainage (34) est disposé à l'extrémité supérieure du conduit central (33).

15. Filtre à modules selon une des revendications 1 à 13, **caractérisé en ce que** les modules filtrants (8) sont orientés avec leurs ouvertures centrales (10) axialement les uns sur les autres, et sont fixés au moyen d'un panneau supérieur de drainage (34) dans le récipient (2).

16. Filtre à modules selon la revendication 14 ou 15,
**caractérisé en ce que** le panneau supérieur de drainage 34 est soutenu par un chapeau de support (12) avec des nervures de support (13) contre le plafond du récipient (36).

17. Filtre à modules selon la revendication 14 ou 15,
**caractérisé en ce qu'**il est prévu comme panneau supérieur de drainage (34) un plateau de serrage (14) doté d'une tige d'ancrage axiale.

18. Filtre à modules selon une des revendications 1 à 17,
**caractérisé en ce que**, entre le fond du récipient (4) et le module filtrant (8) le plus bas, est disposée une plaque de base de drainage (46) qui comprend un évidement (47) dans sa zone adjacente à l'évacuation (7').

19. Filtre à modules selon la revendication 14 ou 15,
**caractérisé en ce que** le panneau supérieur de drainage (34) fixe les modules filtrants (8) entre la plaque de base de drainage (46) soit à l'aide d'un dispositif de pression (49) qui s'appuie en dehors du récipient (2) sur le plafond du récipient (36) ou à l'aide d'un dispositif de pression (49) qui s'appuie à l'intérieur du récipient (2) via une barre centrale (33) et un ensemble de fixation (15) sur le fond du récipient (4).
